(19) Europäisches Patentamt
European Patent Office
Office européen des brevets

(11) **EP 4 131 052 A1**

(12) **EUROPEAN PATENT APPLICATION**

(43) Date of publication:
**08.02.2023 Bulletin 2023/06**

(51) International Patent Classification (IPC):
**G06F 30/20** (2020.01)     **G06F 30/13** (2020.01)

(21) Application number: **21199274.8**

(52) Cooperative Patent Classification (CPC):
**G06F 30/13; G06F 30/20;** G06F 2111/18

(22) Date of filing: **27.09.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2021 IN 202141034994**

(71) Applicant: **Appearition Private Limited**
**Melbourne, Victoria 3000 (AU)**

(72) Inventor: **AIYER, Vivek**
**Melbourne, victoria 3000 (AU)**

(74) Representative: **JD&P Patent Attorneys**
**Joanna Dargiewicz & Partners**
**Ul. Mysliborska 93A/50**
**03-185 Warszawa (PL)**

(54) **SYSTEM AND METHOD FOR SIMULATING RADIO FREQUENCY SIGNAL PROPAGATION THROUGH A PLURALITY OF MEDIUMS**

(57)     There is disclosed a system (100) and method (700) for simulating radio frequency (RF) signal propagation through a plurality of mediums using a plurality of configurable digital representations of building information model in two dimensional (2D) or augmented reality (AR) or virtual reality (VR) environments. The system comprising: a client interface (106) , a processor (112) and a memory (124). The processor (112) comprising a building information model (BIM) generation unit (116), RF equipment conversion unit (118) and a RF propagation prediction unit (120). The BIM generation unit (116) is configured to translate 2D graphics into BIM data-sets, by reference to administrator input, to act as one or more parameters to control a generation of 2D or AR or VR environments. The RF equipment conversion unit (118) is configured to transform adjunct data related to a physical configuration of one or more RF equipment into data models. The RF propagation prediction unit (120) is configured to utilize the one or more parameters and the transformed data related to the physical configuration of the one or more RF equipment for simulating the RF signal propagation pattern predictions through the plurality of mediums.

FIG. 1

EP 4 131 052 A1

**Description**

## FIELD OF INVENTION

The embodiment herein generally relates to a manipulation of three dimensional architectural design. Particularly, the present invention provides a system and method for simulating radio frequency (RF) signal propagation through a plurality of mediums using a plurality of configurable digital representations of a building information model in two dimensional (2D) or augmented reality (AR) or virtual reality (VR) environments.

## BACKGROUND AND PRIOR ART

Presently telecommunication industries relies heavily on remote field workers to perform key activities in relationship to design, planning, procurement, deployment, configuration and maintenance of sites and equipment. The key activities relate to designing, deploying, testing and maintaining wireless networks in commercial or industrial indoor environments rarely ideally configured for the efficient propagation of RF signals. The construction materials, basic configuration of floor space, and the functions of the industrial or commercial space, reduce each space to specific instances of RF design and deployment challenges. On-site RF equipment configuring for acceptable RF signal propagation (often captured in 'heat maps') can be costly. For getting acceptable reception, efficient RF signal propagation is essential. Often, when relying on very expensive testing equipment, the testing routine requires a significant degree of skill and knowledge to ascertain the appropriate positioning and calibration of RF emission sources.

Conventional designs offer the usage of RF propagation predictive tool sets, describing and defining RF emission in mathematical terms, pattern distribution graphs, or at best 2D/3D heat-maps. However these offerings often rely on off-site configuration, using simulations that are yet to be tested on actual/real locations. This forces many assumptions about the configuration of material and positioning of obstacles which may prove erroneous in-situ. Results of these tests are often couched within their own limited convention, and integrating such results with more general solutions, such as BIM based technologies, require special effort. Using off-site predictions can often incur expensive rework.

For example, when using mobile devices in situation that requires a geographical navigation system, and such is not readily available in some coordinates of the actual/real locations/environment. This is a common issue in indoor spaces that lose access to GPS coordinates, or the accuracy of such is lower than acceptable levels for the usage purpose. Indoor navigation systems exist, but they rely on specialist hardware, including the use of LIDAR, ultra-sonic mapping, blue-tooth solutions, and such like. Regardless of the implementation, most of these systems rely on initial hardware configuration and setup, which takes time and effort.

Therefore, there is a need for a system and method for matching a floor map specification to its real world space, with the provision to modify the floor map specification whenever a mismatch is identified in reality or live scenarios, by utilizing a mobile device of average specification, without recourse to specialist equipment.

## SUMMARY OF THE INVENTION

It is an object of the present disclosure to mitigate, alleviate or eliminate one or more of the above-identified deficiencies and disadvantages in the prior art and solve at least the above-mentioned problem.

In view of the foregoing, an embodiment herein provides a first aspect of a system for simulating radio frequency (RF) signal propagation through a plurality of mediums using a plurality of configurable digital representations of building information model in two dimensional (2D) or augmented reality (AR) or virtual reality (VR) environments.

According to the first aspect of an embodiment, the system for simulating radio frequency (RF) signal propagation through a plurality of mediums using a plurality of configurable digital representations of building information model in two dimensional (2D) or augmented reality (AR) or virtual reality (VR) environments comprising: a client interface for uploading a plurality of image files representing the two dimensional (2D) floor plan, a processor and a memory. The processor is connected to the client interface. The processor comprises: a building information model (BIM) generation unit, RF equipment conversion unit and a RF propagation prediction unit. The BIM generation unit is configured to: detect features of the uploaded plurality of image files, in response to access granted for users of the client interface based on their role to access Application Programming Interface (API); transform the detected features of the plurality of image files into Building Information Model (BIM) datasets; and translate the BIM datasets into one or more parameters to control a generation of 2D or AR or VR environments. The RF equipment conversion unit is configured to transform an adjunct data-set related to a physical configuration of one or more RF equipment into descriptive, predictive or analytical schemata, or models that are utilized for two dimensional (2D) or augmented reality (AR) or virtual reality (VR) depictions. The RF propagation prediction unit is configured to utilize the one or more parameters and the transformed adjunct data related to the physical configuration of the one or more RF equipment for simulating the radio frequency (RF) signal propagation pattern predictions through the plurality of mediums.

According to the first aspect of an embodiment, the BIM generation unit is further configured to provide an authentication to the users of the client interface based on their role to access the API. The control of the generation of the 2D or AR or VR environment is performed by enabling 2D or augmented reality (AR) or virtual reality (VR) mode to synchronize the digital representations of the detected plurality of image files. The digital representations of the detected plurality of image files can be synchronized by at least one to calibrate a relative position of the 2D floor plan onto an actual point in a locality; scale and rotate the virtual representation into dimensions and bearing of an actual environment within its local domain; and continuously synchronize the digital representations with the actual world dimensions as the user navigates actual space by mapping a floor space of the actual world with the 2D floor plan.

According to the first aspect of an embodiment, the control of the generation of the 2D or AR or VR environment is performed by enabling augmented reality (AR) or virtual reality (VR) mode to synchronize the digital representations of the detected plurality of image files using Visual Odometry (VO) and Simultaneous Localization and Mapping (SLAM) techniques. The RF equipment conversion unit is further configured to catalogue engineering or mathematical data pertaining to the physical configuration of RF equipment that is transformed into descriptive, predictive or analytical schemata, or models, required to implement machine based description, prediction or analytical reports.

According to the first aspect of an embodiment, the client interface is configured to enable modifications to the uploaded plurality of image files representing the 2D floor plan and corresponding material configuration of barriers and obstacles in response to a request from the user at any instance. The RF propagation prediction unit is configured to produce on-line RF propagation predictions in at least one 2D, AR or VR mode depictions in response to a request from the user, by obtaining one or more parameters related to modifications to the uploaded plurality of image files representing the 2D floor plan and corresponding material configuration of barriers and obstacles at any instance.

According to the first aspect of an embodiment, the RF propagation prediction unit is configured to render generated visualizations of selected at least one initial prediction after acceptance from the user. The RF propagation prediction unit is designed to render the generated visualizations of at least one initial prediction. The at least one initial prediction is related to a dataset depicting a real world location with or without a complete physical configuration specifications (i.e. modifications to its layout). Further, input from the user that relates to completing the virtual representation of the live /floor space being inspected after rendering the generated visualizations comprises at least one of: a correction of a plurality of boundary or barrier locations of the floor space; the selection of objects and their poses as encountered in the real environment or a live location; matching of physical material configurations of objects in the floor space, which are paired to respective mathematical properties sufficient to act as one or more parameters of the at least one initial prediction.

According to the first aspect of an embodiment, the BIM generation unit is configured to receive uploaded BIM datasets directly through the client interface by the user based on their role. The user of the client interface having access to manage a selection and creation of digital material delivery distribution, within its domain, including most modern floor configurations of digital representations. The plurality of image files representing a two dimensional (2D) floor plan comprises at least one of Bitmap type files, JPG, JPEG and PNG files, or other 2D graphic formats. The BIM generation unit is configured to transform the detected features of the plurality of image files into Building Information Model (BIM) data-sets using a Headless Content Management System.

According to a second aspect of an embodiment, a method for simulating radio frequency (RF) signal propagation through a plurality of mediums using a plurality of configurable digital representations of building information model in two dimensional (2D) or augmented reality (AR) or virtual reality (VR) environments. The method comprising the steps of uploading, by a user, a plurality of image files representing the two dimensional (2D) floor plan using a client interface; detecting features of the uploaded plurality of image files, in response to access granted for users of the client interface based on their role to access the Application Programming Interface (API); transforming the detected features of the plurality of image files into Building Information Model (BIM) data-sets; translating the BIM data-sets into one or more parameters to control a generation of 2D or AR or VR environments; transforming adjunct data related to a physical configuration of one or more RF equipment into descriptive, predictive or analytical schemata, or models that are utilized for two dimensional (2D) or augmented reality (AR) or virtual reality (VR) depictions; and utilizing the one or more parameters and the transformed data related to the physical configuration of the one or more RF equipment for simulating the radio frequency (RF) signal propagation through the plurality of mediums.

According to a second aspect of an embodiment, the method further comprising, providing an authentication to the users of the client interface based on their role to access its API. The controlling of the generation of the 2D or AR or VR environment is performed by enabling augmented reality (AR) or virtual reality (VR) mode to synchronize the digital representations of the detected plurality of image files. The digital representations of the detected plurality of image files is synchronized by performing at least one: calibrating a relative position of the 2D floor plan onto an actual point in a locality; scaling and rotating the virtual representation into dimensions and bearing of an actual environment within its local domain; and continuously synchronizing the digital representations with the actual world dimensions as the user navigates actual space by mapping a floor space of the actual world with the 2D floor plan.

According to a second aspect of an embodiment, the method further comprising, cataloguing engineering or mathematical data pertaining to the physical configuration of RF equipment that is transformed into descriptive, predictive or analytical schemata, or models, required to implement machine based description, prediction or analytical reports. The method further comprising, enabling modifications to the uploaded plurality of image files representing the 2D floor plan and corresponding material configuration of barriers and obstacles in response to a request from the user at any instance. The method further comprising, producing on-line RF propagation predictions in at least one 2D, AR or VR mode depictions in response to a request from the user, by obtaining one or more parameters related to modifications to the uploaded plurality of image files representing the 2D floor plan and corresponding material configuration of barriers and obstacles at any instance.

According to a third aspect of an embodiment, a computer program product comprising instructions which, when executed on at least one processor, cause the at least one processor to carry out the method for simulating radio frequency (RF) signal propagation through a plurality of mediums using a plurality of configurable digital representations of building information model in two dimensional (2D) or augmented reality (AR) or virtual reality (VR) environments as described in the second aspect of an embodiment.

According to the third aspect of an embodiment, a carrier containing the computer program product according to the method described in the second aspect of an embodiment, wherein the carrier is one of an electronic signal, optical signal, radio signal, or computer-readable storage medium.

Effects and features of the second through forth aspects are to a large extent analogous to those described above in connection with the first aspect. Embodiments mentioned in relation to the first aspect are largely compatible with the second through sixth aspects.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

The present disclosure will become apparent from the detailed description given below. These and other aspects of the embodiments and other objects and advantages of the present invention herein will be better appreciated and understood when considered in conjunction with the following description and the accompanying drawings. The accompanying drawings are incorporated for illustration of preferred embodiments of the present invention and are not intended to limit the scope thereof. It should be understood, however, that the following descriptions, while indicating preferred embodiments and numerous specific details thereof, are given by way of illustration and not of limitation. Different configuration changes and modifications may be made within the scope of the embodiments herein without departing from the spirit thereof, and the embodiments herein include all such modifications.

**BRIEF DESCRIPTION OF DRAWINGS**

The detailed description is set forth with reference to the accompanying figures. In the figures, the left-most digit(s) of a reference number identifies the figure in which the reference number first appears. The use of the same reference numbers in different figures indicates similar or identical items.

Fig.1 illustrates an exemplary embodiment of a system for simulating radio frequency (RF) signal propagation through a plurality of mediums in a two dimensional or augmented reality (AR) or virtual reality (VR) environment, according to a first aspect of an embodiment herein;

Fig. 2 illustrates an exemplary sequence diagram of an authentication activation and initial configuration in a client interface/session using the system, according to a first aspect of an embodiment herein;

Fig. 3 illustrates an exemplary sequence diagram of an authentication activation and initial configuration in a client interface/session for non-administrator using the system, according to a first aspect of an embodiment herein;

Fig. 4 illustrates an exemplary sequence diagram of an initial floor calibration using the system, according to a first aspect of an embodiment herein;

Fig. 5 illustrates an exemplary sequence diagram of a synchronization of the 2D floor map and AR/VR projection in two directions, according to a first aspect of an embodiment herein;

Figs. 6A and 6B illustrates an exemplary sequence diagram of RF prediction visualization mechanism using the system, according to a first aspect of an embodiment herein; and

Fig. 7 illustrates an exemplary embodiment of a method for simulating radio frequency (RF) signal propagation through a plurality of mediums in a two dimensional or augmented reality (AR) or virtual reality (VR) environment, according to a first aspect of an embodiment herein.

## DETAILED DESCRIPTION OF THE PREFERRED EMBODIMENTS

The embodiments herein and the various features and advantageous details thereof are explained more fully with reference to the non-limiting embodiments and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

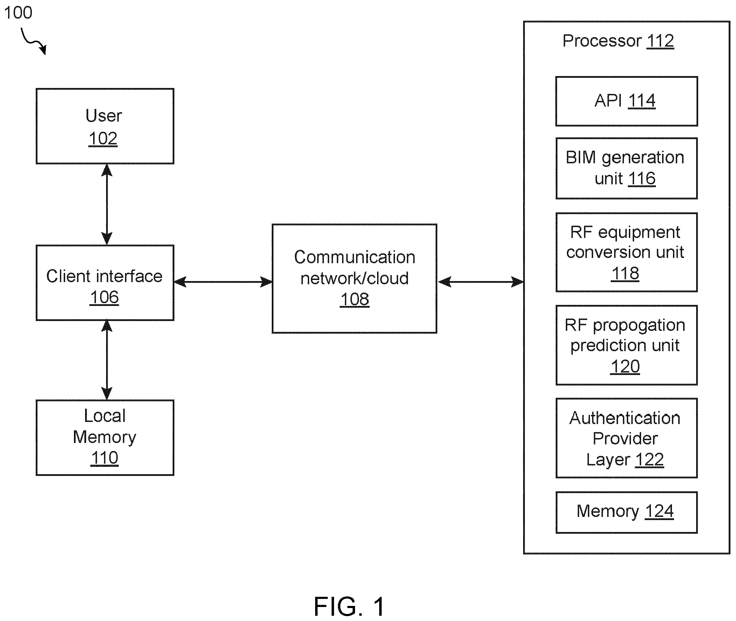

As mentioned above, there is a need for a system and method for matching a floor map specification to its real world space, with the provision to modify the floor map specification whenever a mismatch is identified whilst performing an inspection, by utilizing a mobile device of average specification, without recourse to specialist equipment. The embodiments herein achieve this by providing a system for simulating radio frequency (RF) signal propagation through a plurality of mediums using a plurality of configurable digital representations of building information model in two dimensional (2D) or augmented reality (AR) or virtual reality (VR) environments. Referring now to the drawings, and more particularly to FIGS. 1 through 7, where similar reference characters denote corresponding features consistently throughout the figures, there are shown preferred embodiments.

The embodiments of the present invention provide a set of tools and mechanisms to generate and configure virtual Radio Frequency (RF) Emission equipment and physical barriers that weaken, distort or negate RF propagation in indoor or outdoor spaces through the use of augmented reality and complimentary methods. Furthermore, the method converts AR experience to Building Information Model (BIM) data that can be used by a RF propagation prediction engines.

Fig. 1 illustrates an exemplary embodiment of a system 100 for simulating radio frequency (RF) signal propagation through a plurality of mediums in a two dimensional or augmented reality (AR) or virtual reality (VR) environment, according to a first aspect of an embodiment. The system 100 comprising a client interface 106, a processor 112 and a memory 124 (for example: memory module). The client interface 106 is provided for uploading a plurality of image files representing the two dimensional (2D) floor plan. The client interface 106 is connected to the local memory 110 provided in a user device/ wireless device. The processor 112 is connected to the client interface 106. The processor 112 comprising: a building information model (BIM) generation unit 116, RF equipment conversion unit 118 and a RF propagation prediction unit 120. The BIM generation unit 116 is configured to detect features of the uploaded plurality of image files, in response to access granted for users 102 of the client interface 116 based on their role to access Application Programming Interface (API). The BIM generation unit 116 is configured to transform the detected features of the plurality of image files into Building Information Model (BIM) datasets using a plurality of image processing techniques. The BIM generation unit 116 is configured to translate the BIM datasets into one or more parameters to control a generation of 2D or AR or VR environments at a BIM translation layer.

The RF equipment conversion unit 118 is configured to transform a data-set related to a physical configuration of one or more RF equipment into useful data packages that can be utilized for descriptive, predictive or analytical purposes. A transformation layer packages descriptive, predictive and analytical data into data models useful in AR or VR depictions. That is, the data related to a physical configuration of one or more RF equipment is transformed into descriptive, predictive or analytical schemata, or models that are utilized for two dimensional (2D) or augmented reality (AR) or virtual reality (VR) depictions. The RF propagation prediction unit 120 is configured to utilize the one or more parameters and the transformed data related to the physical configuration of the one or more RF equipment for simulating the radio frequency (RF) signal propagation pattern predictions through the plurality of mediums. That is a connective layer is used to link the system 100 to machine provisioned prediction engines or units, including but not limited to discerning RF propagation patterns.

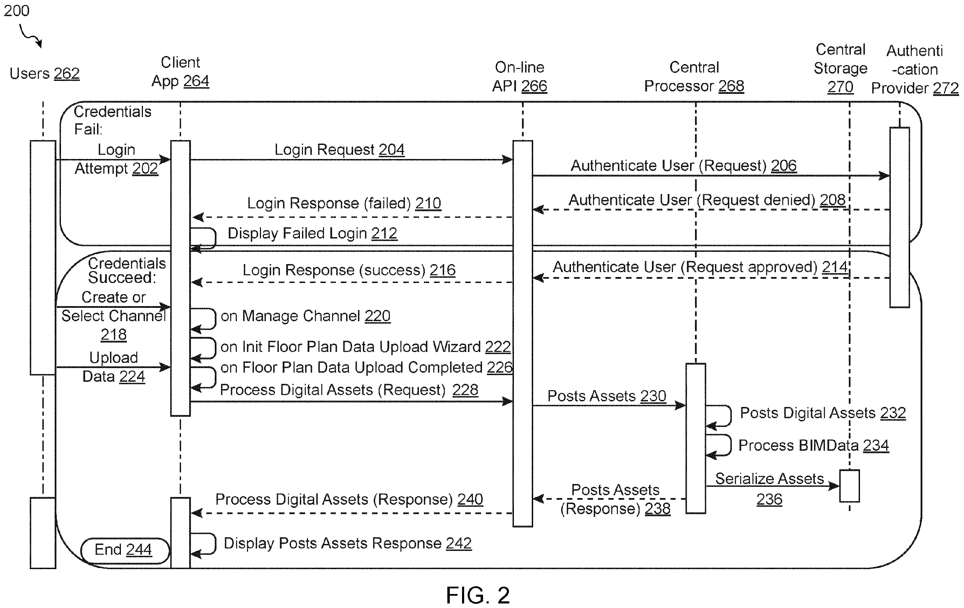

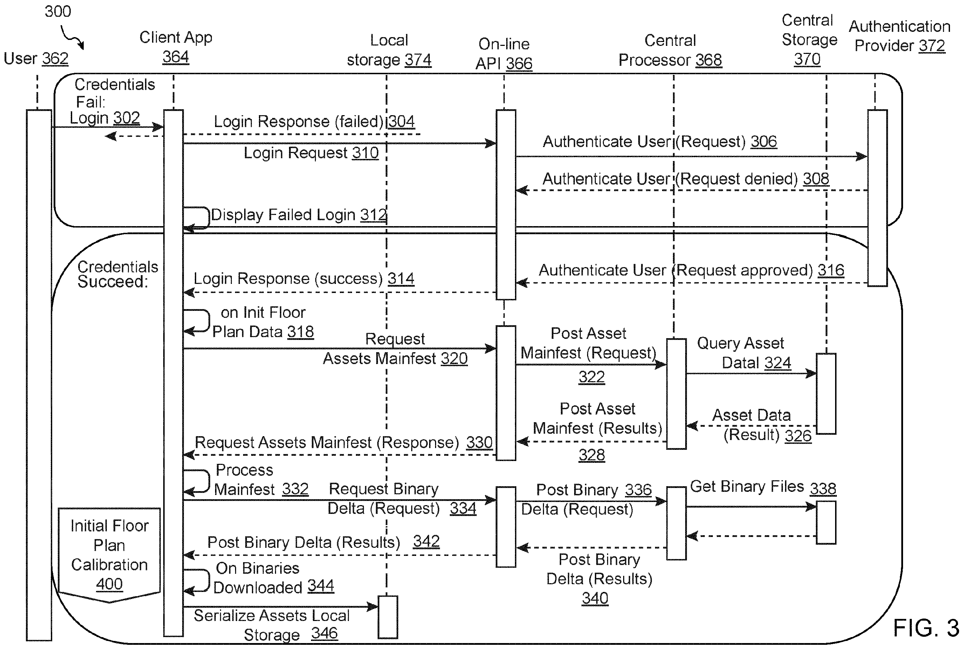

The BIM generation unit 116 is configured to provide an authentication to the users of the client interface 106 based on their role to access the API by an authentication provider layer 122. The authentication can be provided to the users of the client interface to access the API based on their role such as an administrator (referred from hereon as admin) or non-admin/power user. For the user with admin role, the access provided is related to data administration responsibilities. For the user with non-admin role, the access provided is related to all key features provisioning the client session/interface with instantiating information to support a standard user with their intended task. At least one separate but intermittently connected session entity connects to the processor/ online central processing system via the own Application Programming Interface (API). A segment of this API layer provides services to the administrators or the power users, to insert, update or delete seeding data. The seeding data being defined inclusively but not limited to: packages of data including lookup records; machine training data sets; instructional information; ancillary Binary Large Objects (BLOB), including most modern forms of digital representations; and being promulgated by users with admin privileges. At least one client device having a client interface/application coupled to be in communication with a cloud or on-line system via a communications network relying on the system's API, and client software development kit (SDK) thus enabling an authenticated client session. Some examples for providing the authentication to the users of the client interface based on their role to access the API is described in following paragraphs related to FIGS. 2 and 3.

When considering data transactions, the provisioned client session/ authenticated users are allocated on-line access to the seeding data, conditional on the successful validation and authentication of credentials, based on any commercially viable type, such as, but not limited to, login/password entry values, fingerprints, facial recognition or any other authentication system in current acceptance. This seeding data is packaged by the online central processing system for conversion as a context based asset manifest. The manifest is defined in terms of JavaScript Object Notation, JSON, with a data model of the design, which provides the range of possible values and data to instantiate a listing of all locations submitted for analysis within the current client session. The session can query the manifest and compare it to its cache of locally encrypted digital resources, requesting further digital asset packages should a delta exist between the latest asset manifest and existing resources. The new manifest and its adjunct payload of BLOB data types, is downloaded from the central system, triggering the response stream to be serialized into local storage for further processing.

In the admin provisioned client interface/session facet, relevant admin functions are accessible through the Application Programming Interface (API). The admin/administrator can upload BIM data and process corresponding payload for AR and VR visualization purposes. Further, the administrator can upload image files representing floor plans that can be processed by a combination of automated image feature detection and manual user intervention, that are then stored into data models that can be transformed to BIM, AR or VR representations. The image files can be at least one of Bitmap type files, JPG, JPEG and PNG files. In addition, the admin can catalogue engineering or mathematical data pertaining to the physical configuration of RF equipment that is transformed into descriptive, predictive or analytical schemata, or models, required to implement machine based description, prediction or analytical reports.

With the admin provisioned client session/ interface, the user can be allowed to include at a minimum 2D depictions and either an AR or VR counterpart. In all respects the various final renditions require access to BIM datasets that are already processed by the BIM generation unit, and packaged as JavaScript Object Notation (JSON) data models. Instructions that direct the rendering of the floor plan, or any of its components, are products of relevant JSON data queries and transformations. The floor plan can be presented as a 2D representation or a VR representation with the required order of immersive magnitude (full, semi, or non-immersive); and/or an AR version. The user of the provisioned client session/ interface navigates the 2D, VR or AR versions with same objectives in mind, allowing such user to configure the floor plan appropriately.

The non-admin users can modify original designs through an optional use of 2-Dimensional (2D), VR or AR variants of an integrated visual editing studio inherent in the client session/interface. These modification studio variants can be accessed prior to the on-site visit (2D or VR); in-situ (2D or AR); or post on-site visit (2D or VR), to craft changes to any part to the floor plan. The studio options enable the insertion, deletion or modification of boundaries, walls or barriers, defined in terms of their physical properties. The captured physical properties have the potential to alter the propagation path of RF signals, as well as impacting on the positioning and configuration of RF equipment. According to an embodiment, the system comprising the processor/online central processing system, inherently accessing the functionality of the invention, accessible by at least one administrator and/or power user, but including various other roles as determined by its context, the administrator managing the selection and creation of digital material delivery distribution, within its domain, including most modern forms of digital representations.

According to an embodiment, the client interface is configured to enable modifications to the uploaded plurality of image files representing the 2D floor plan and corresponding material configuration of barriers and obstacles in response to a request from the user at any instance. Equally, requests to produce on-line RF propagation predictions that are also valid at any instance. Each request relayed to the RF propagation prediction unit, via the API, which takes in the parameters provided by the user in terms of the modifications made to the floor plan in any of the modes described, 2D, AR or VR depictions.

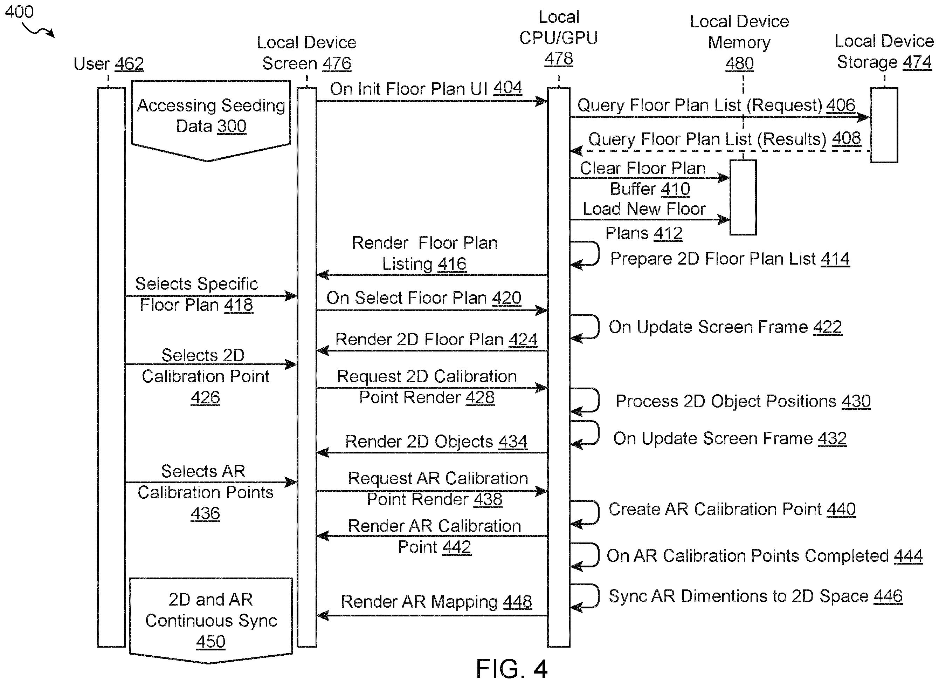

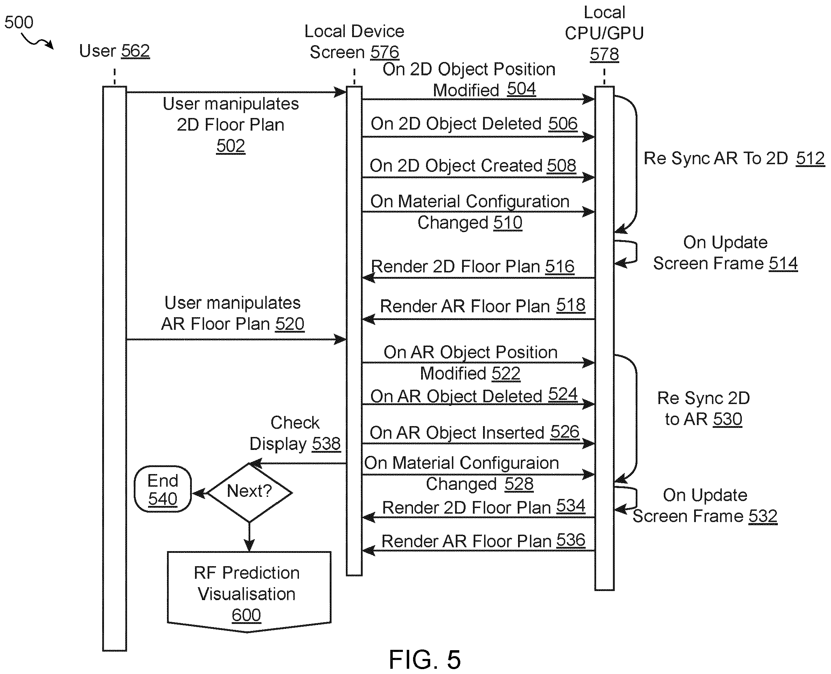

According to an embodiment, the control of the generation of the 2D or AR or VR environment is performed by enabling augmented reality (AR) or virtual reality (VR) mode to synchronize the digital representations of the detected plurality of image files using Visual Odometry (VO) and Simultaneous Localization and Mapping (SLAM) techniques. The digital representations of the detected plurality of image files is synchronized by calibrating a relative position of the 2D floor plan onto an actual point in a locality. Further, the digital representations of the detected plurality of image files is synchronized by scaling and rotating the virtual representation into dimensions and bearing of an actual environment within its local domain. The digital representations of the detected plurality of image files is synchronized by continuously synchronizing the digital representations with the actual world dimensions as the user navigates actual space by mapping a floor space of the actual world with the 2D floor plan. Information from the environment and user input that relates to form (floor configuration) and substance (indoor objects in their relative real world positions and real world material configurations) is translated by the system as input parameters that dictate the outcome of RF propagation pattern predictions , and may also inform a variety of other implementations related to managing indoor space configuration. Some examples for synchronizing and calibrating the digital representations of the detected plurality of image files using Visual Odometry (VO) and Simultaneous Localization and Mapping (SLAM) techniques are described in paragraphs related to FIGS. 4 and 5.

According to an embodiment, the system is configured to enable the user accessing the client application to download one or more media items to a local storage system upon interrogation of a database residing in the memory or a content management module. Preferably, the system issues a unique client token upon selection of a specific client app, which is used to authenticate all API calls by the content management module and ensure that only valid applications are accessing the system. Preferably, a submission to create a new channel, managed by components of the online central processing system, elicits the creation of a new content management channel and application programming interface application token, the channel and uniquely identifiable application token being required to isolate records from other client applications. Preferably, upon authentication of the client application, the client application will download one or more content package/s that are either not present in a local storage system or have been modified by the content management module portal but not yet downloaded by the client application. Suitably, at least one alert is issued to a user and/or administrator in the event that there is a connectivity disruption or downloading issue. Preferably, at least one request and at least one response issued by the system is in JSON format, with a structured suited for its business, but also provisioned with a header object, denoting a field with a value declaring the main purpose of such JSON.

According to the first aspect of an embodiment, the client interface 106 is configured to enable modifications to the uploaded plurality of image files representing the 2D floor plan and corresponding material configuration of barriers and obstacles in response to a request from the user at any instance. The RF propagation prediction unit 120 is configured to produce on-line RF propagation predictions in at least one 2D, AR or VR mode depictions in response to a request from the user, by obtaining one or more parameters related to modifications to the uploaded plurality of image files representing the 2D floor plan and corresponding material configuration of barriers and obstacles at any instance.

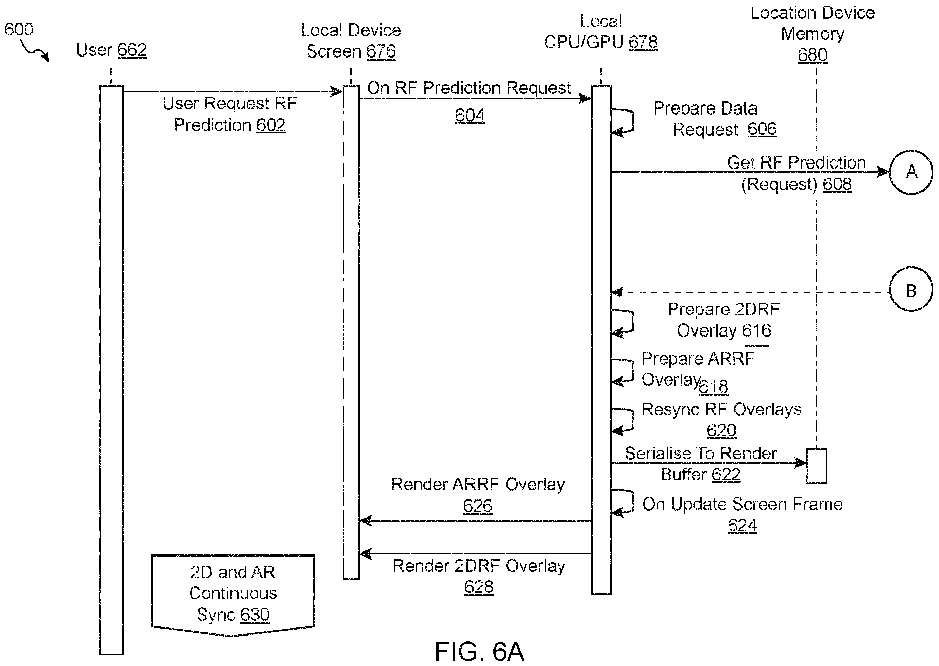

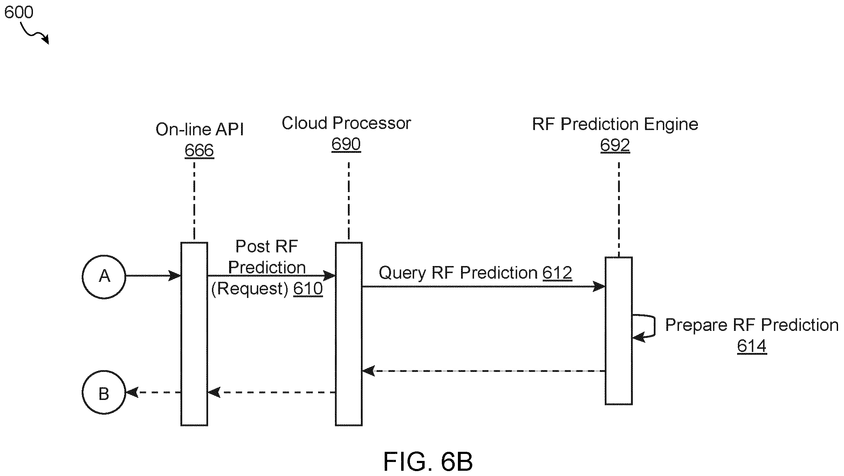

According to the first aspect of an embodiment, the RF propagation prediction unit 120 is configured to render generated visualizations of selected at least one initial prediction after acceptance from the user. The RF propagation prediction unit 120 is configured to render the generated visualizations of at least one initial prediction. The at least one initial prediction is related to the dataset depicting the floorplan with or without a complete physical configuration specifications (i.e. modifications to its layout). Further, input from the user that relates to completing the virtual representation/floor configurations and indoor objects in the relative actual world positions and material configurations in the actual world can also be integrated with new predictions taking into account such modifications. The modifications includes at least one of: a correction of a plurality of boundary or barrier locations of the floor space; a selection of objects and their poses as encountered in the real environment; and a matching of physical material configurations of objects in the floor space, which are paired to respective mathematical properties sufficient to act as one or more parameters of the at least one initial prediction. Some examples for RF propagation prediction visualization is described in following paragraphs related to Figs. 6A and 6B.

According to the first aspect of an embodiment, the BIM generation unit is configured to receive uploaded BIM datasets directly through the client interface by the user based on their role. The user of the client interface having access to manage a selection and creation of digital material delivery distribution, within its domain, including most modern floor configurations of digital representations. The plurality of image files representing a two dimensional (2D) floor plan comprises at least one of Bitmap type files, JPG, JPEG and PNG files. The BIM generation unit is configured to transform the detected features of the plurality of image files into Building Information Model (BIM) data sets using a Headless Content Management System.

Fig. 2 illustrates an exemplary sequence diagram 200 of an authentication mechanism including an authentication activation and initial configuration in a client interface/session using the system, according to a first aspect of an embodiment. The interaction of various components residing in a client device, as well as in a processor or an on-line connected central processing unit, utilize an https secured connection to achieve activation through central validation of credentials and activation of critical online responses and services to resolve the initial configuration and activation of the client session. The authentication mechanism is initiated by the users 262 by attempting a login to the client session/app/ interface 264. The users 262, attempt to log in to the on-line central processing unit 202 by posting their credentials through the client session 264. Through a client SDK provisioned within the client session/ interface the processor 268 engages its application programming interface API or On-line API 266 which requests an authentication provider 272 to authenticate 206 the user 262. The client interface processes the request by initializing and launching a credential authentication request through the API 15, by using an encrypted https session. On receiving the request the Authentication Provider Layer, APL, invokes processes to authenticate and validate the user in terms of their level of access to the system. The request for authenticating the user is confirmed by comparing credentials of the user against credentials managed by any variety of Authentication Providers, as configured by the APL. Based on the confirmation, the request for authentication can be denied 208 or approved 214. The confirmation of the authentication for the access claim from the user is dependant on the validity of such credentials. In cases when the credentials fail to pass the validation/authentication regime, the system responds with an access request denied notification 208, which is transmitted during the originating authentication session back to the client session 264, whereupon the client session displays a login failure message to the user 212. In an event of successful credential validation, where the authentication request session is approved 214. The successful login response payload may be session or token-based, depending on the usage requirements, with either option not impacting on the implementation of this conception. For example, the sequence of the authentication process for the user is illustrated in the figure 2 steps from 202 to 216.

After successful authentication, the central system may respond by displaying an on-line portal, commissioned as an admin visual wizard to "create new", "modify existing", or "select existing" data channels. The user in this version of events acts as administrator, creating or selecting a channel 218, to which all subsequent session transactions can be incurred. During this session the administrator can upload 222 and modify a data package, which may include Building information model (BIM) data, 2D floor plan diagrams as bitmap types, and other records pertaining to floor plan and RF equipment management. The successful login response payload may be session or token-based, depending on the usage requirements, with either option not impacting on the implementation of this conception. The on-line system responds by processing the data, here-forth referred as the Seeding Data, to provision a client session prepared to support the tasks assigned to such session, and provides a view, through its portal, of a summary of the actions taken by the system, in line with process expectations. The user may create or select an already published channel to work on 220. The creation and modification of channel seeding data to provision a new channel, or modify an existing entity, is a routine process. This process does not mandate further explanations, other than to elucidate that channel management has the outcome of isolating data into its own sub domains, for the purposes of data ownership and control.

The admin user, having selected a particular site and then floor plan option, uploads the floorplan data, which may include floor-plan bitmap types, or their alternative as BIM type models. In either case, the administrator may also include floor-plan material configuration, that is, the material metadata that describes physical boundaries, barriers and obstacles along with the required mathematical properties that inform the RF propagation prediction unit.

The preparation and entering of data 60 is managed by the floor-plan data upload wizard during its active cycle 65, which ends once the admin user submits the data 70. The data is packaged by the client session in correlation with the appropriate API call, which in this instance carries a listing of all work packages and their supporting material when uploaded 75. A request to process the client session provisioned digital assets 232 is posted 234. The central processor accesses the uploaded data package, which may include BIM data, 2D floor plan diagrams as bitmap types, and other records pertaining to floor plan and RF equipment management. On finding bitmap data the central processor attempts to load the Bitmap, which may take the format of various common conventions (for instances, jpg, jpeg, png, and others) into internal memory for further processing 236. That is on completion of floor plan data uploading 226 the digital assets process request 228 can be forwarded to the API. The assets can be posted 230 to the central processor 268. The digital assets/ representations 232 are processed by transforming their aspect into a BIM data-sets 234. The digital assets are catalogued and serialized 236 and stored in the central storage or memory 270. The image object is then processed by an image processing pipeline that results in identifying key image features salient to 2D floor map diagrams, such as lines and symbols of cartographic significance 238. Once the necessary image features are extracted they are converted to data points forming the shape (line, point or other symbols) and translated into a data model serialized by a JSON structure 240.

That is on completion of floor plan data uploading 226 the digital assets process request 228 can be forwarded to the API. The assets can be posted 230 to the central processor 268. The digital assets/ representations 232 are processed by transforming them into a BIM data-set 234. Once processing of all data is completed, the centrally stored data model is updated with pertinent data, such as, new floor plan data; equipment, material meta data; and other items of interest that have been inserted into the current uploaded data package. That is, the digital assets are catalogued and serialized 236 and stored in the central storage or memory 270. The serialized data assets 236 are posted at the client session/interface through the API 266 in response to the process request 238. The initial configuration in a client interface/session is completed 244 by displaying the post assets response 242. The appropriate response notification is sent back to the client session 264, which includes an asset manifest descriptor, including the data models and binary adjuncts that can be accessible for later access by user configured sessions. The admin user may select to end the session 244.

Fig. 3 illustrates an exemplary sequence diagram 300 of an authentication activation and initial configuration in a client interface/session for non-administrator using the system, according to a first aspect of an embodiment. When the user is a non-administrator, the authentication cycle follows a similar logic to the already described FIG. 2. Upon successful authentication, the client session responds by requesting a new asset manifest, through its SDK, which implements the necessary API calls, to download the appropriate JSON package. The JSON package is processed, and a new request for BLOB objects is prepared by the client session in terms of binary deltas, that is, adjunct files that are missing from the client cache or belong to a defunct earlier version. Once the delta binaries are downloaded, they are serialized on local client storage ready for use as Seeding Data by the Floor Calibration Phase, will be described in FIG. 4.

In FIG. 3, the user logs into the system 300, through the system "AuthenticateUser" API 306, which is processed by an Authentication Provider layer 372. In instances of access credential mismatch or failure 308, the Authentication Provider layer responds with a "401", "403" or other Representation State Transfer, REST, exception response code 308. The failure response is passed on to the client session 312 which has the logic to display a meaningful exception, or error condition, via a client device 364. In situations where user credentials succeeds, the session is approved 316, and a unique encrypted session validation token is relayed through the API response 314, with the client session/interface receiving the response and initiating a system workspace in readiness to request and process further data 318. The client session 364 prepares a request for the assets manifest relevant to the user's situation by incorporating the location/s of interest into the request. From here on, all request by the client session/App 364 also contain the appropriate session validation token already provided by the central processor 368. The API 366 wraps the request and post it to the central processor 368. The central processor 368 uses the parameters invoked by the request to construct the appropriate query 324 which filters the data necessary to fulfil the request 326.

The central processor 368 wraps the data results into the API response 328, and sends back the response to the client session 330. The client session 364 processes the manifest 332, which includes determining any digital media (binary files) that may be missing, or defunct due to versioning differences, in which case the client session requests the appropriate down-streaming of missing or defunct media files from the central processor 334 by inserting the appropriate parameters on to the API request 336. The central processor sets the appropriate access to storage to permit the appropriate files to be downloaded 338 and orchestrates the downloading of the relevant files from storage 340. Once the sets of files are received by the client session 342, the client session saves the files in local device storage for further use 310. These records and binary support data (2D images or 3D data objects) would have been set up by the administrator for the intended user to access and utilise in response to their requirements.

For example, considering basic Structure of Original Client Side Floor Plan Specification JSON, all Fields that contain Ids are maintained and cross referenced by functions relevant to the central processor and its main database functionality. This central database is not further described as it is not directly pertinent to the claims of this submission. "materialId" represents a grouping of information, declared, related to the "realWorldMaterialName", "realWorldMaterialPropertiesId" and "mathematicalRFpropertiesId" which the RF prediction engine uses as parameters to carry out RF propagation predictions. The "floorSegment" fields: {"graphicColorId","textureId"," graphical2DObject","graphicalARObject"}, form part of a client dictionary that enforces different type of graphical and AR compositions depending on the property values encrypted. The combination graphicColorId and textureId provide the graphical material and color that the client will paint the objects with. The graphical2DObject and graphicalARObject use the digital objects, in 2D and 3D options, afforded to paint the appropriate shapes in 2D and AR space accordingly, which may include lines of varying widths, opacity levels, embedded textures, and 3D objects depending on requirement.

For example, considering a Client Side Floor Plan Validation JSON, this represents a JSON type structure generated by the client studio whenever modifications occur. FloorSegmentId is null in instances where the "actionType" is "CREATED", meaning the new floor segment was included by the user whilst exploring the site. This floorSegment, as newly created by a client studio, necessitates central processing validation and approval. In due time, a new floorSegmentId is generated by the central processor. If a user "DELETED" OR "SHIFTED" an originally specified floor segment, then such segment retains its original floorSegmentId. In instances that RF equipment is inserted within the confines of a specific floorSegment, then the equipmentId field records the equipment used, otherwise this field remains null. The field "actionType" denotes the activity that has taken place, enumerated as an integer value with such system actions as {CREATED, DELETED, SHIFTED, MATERIALMODIFIED, EQUIPMENTLOCATED}. These activities are classified by the client studio and a new record is generated as a new floorSegment node, which is inserted into the floorSegments section of the Client Side Floor Plan Validation JSON body. The client session uploads JSON instances of this type to record all changes made to the original JSON floor plan specification. The system administrator can opt to accept changes to the design and/or material structure of the validated floor plan. At the very least this floor plan validation package will have the inclusion of RF equipment and configuration. This information is turned into the necessary query parameters to run the RF predictions to which the client session can respond by rendering visualizations of such in 2D and AR modes.

All Fields that contain Ids are maintained and cross referenced by functions relevant to the central processor and its main database functionality. This central database is not further described as it is not directly pertinent to the claims of this submission. The field "allowLocalCaching" permits or rejects the use of a complete download of all asset data on client initialisation. AllowLocalCaching = false does not perform downloads on client activation, but only downloads the data required per floor-plan request. AllowLocalCaching = true, downloads all JSON and binary support data immediately on client session activation.

This data set would be configured in a manner similar to that expressed and its tuples described above, culminating in a client data model equivalent to that described above.

Fig. 4 illustrates an exemplary sequence diagram 400 of an initial floor calibration using the system 100, according to a first aspect of an embodiment. After successfully downloading and serializing a Seeding Data, the client session requests a floor plan itemization of the intended on-site visits prescribed. This list is rendered as an interactable client device appropriate visual representation, presenting the floor plan options available. The user selects a floor plan option, causing the client device to render the selection, initially as a 2D depiction. The user inputs two points in the 2D floor plan diagram, using tools detailed in discussions related to FIG. 5. These points construct the 2D calibration directed line segment that provides the bearings, pivot and scale information to be used by AR or VR depictions. Once finalized the 2D calibration artifact engenders the proper positioning and scale of the AR projections that will be rendered by the client device on top of the user's view of their locality.

The initial floor calibration phase that users visiting a location represented in Fig. 4 would be required to complete in order to use the system correctly. This phase presupposes that the phase described in the FIG. 3, section 300, has completed. At this stage the client device would initiate the floor plan presentation layer 404. The local system would perform a query to identify the plan, or plans, that merit presentation to the user in respects to their circumstances, which may include but not be singly defined by work order/s, user and/or location profiles, and/or any other conditions or properties pertaining to the usage of the system. This configuration, previously set up by the administrator, contains data similar to that described above.

On selecting a specific floor plan 406, the local client model data stored in memory is deleted 410, and the new data is serialized 412. The new floor plan listing is prepared. The basic form of the AssetManifest data model is constructed directly from the centrally transmitted JSON that contains the Seeding Data. This is parsed and processed into a data structure as described above. Client widgets, such as the floor plan listing, may also utilize metadata items to define listing information 416. With the listing depicted, which presents all available floor plans accessible to that specific user, such user may select a specific floor plan to work on 418. The selection of a floor plan 404 engages a client rendering cycle to begin by rendering a 2D depiction of the floor plan 422. The 2D diagram is rendered by the client 2D graphical system, which is reliant on the data models described the above paragraphs. This process defines the position, location, shape, texture, colour and metadata of each 2D and AR element drawn by the client graphical rendering engine, which at points renders the 2D depiction 424.

Once the user selects two calibration points, the system requests the rendering of such points in 2D space 428. The system processes the positions of these 2D calibration points, prepares the 2D rendering cycle 432, and renders the 2D objects, including the newly inserted calibration points 434. The user proceeds by selecting the equivalent locations in AR space in which to place the AR calibration points 436, the system requests the rendering of such points in AR space 438. The system processes the positions of 2D calibration points, one at a time, with the first AR calibration point being calculated 440 and then being rendered 442; whilst the second AR calibration point proceeds through the same cycle, but also triggers an AR calibration completed event once completed 444. This event launches synchronization between AR and 2D depictions 446, and renders the AR mapping 448 of the floor space in a continuous cycle 450.

Fig. 5 illustrates an exemplary sequence diagram 500 of a synchronization of the 2D floor map and AR/VR projection in two directions, according to a first aspect of an embodiment. Modifications can be entered into the 2D floor map space which immediately project onto the AR/VR world space; or as AR/VR direct modifications which project their equivalent onto the 2D floor map. Objects in both 2D or AR/VR space can be created, modified or deleted. The material configuration for each created or modified object, that is, the real world makeup of the object as a physical and mathematical entity, is initially set up as part of the Seeding Data by the administrator of the system. This information is downloaded as part of the asset manifest, within dictionary nodes nested in the JSON data model. On modifying original floor plans the user, when appropriate, also includes the material configuration of the new objects created or modified as part of the workflow. This is essential for driving a correct RF propagation prognosis.

Fig. 5 also illustrates the mechanics of the 2D and AR Synchronization Studio, which represents the set of visual tools available to users, admin and main user, for managing modification to floor plans in all depictions modes (2D, AR, VR) and sourcing the query data to induce a successful RF propagation prediction. By reference to FIG. 2, the two central processor phases can be identified that exist to process either, BIM data and/or Bitmap's only representations, with either case representing original floor plans. The on-line central processing always attempts to process BIM data records, if available, to translate them into JSON dictionary nodes for the use of the client session (as described in FIG.2). These dictionaries are incorporated into the client tool, 2D *and AR Synchronisation Studio,* referred as a client studio, to provision the respective visual widgets to incorporate the material definitions detailed in the material dictionary into any newly created or modified 2D, AR or VR objects inserted by the administrator or main user to signify an addition or modification into the design of a floor plan. In terms of Bitmap only phase, the central processor performs an initial feature detection on edges, circles, and other geometric features, using a form of Hough Space mapping, which generates a list of paired data points used to draw line segments and the various geometric elements necessary to depict the floor plan. Points or areas that are not captured correctly by an algorithm, can be rectified by the user via the paint tools available within the context of the client modification studio. In all instances every object created or recreated in the studio is serialized and implemented as data points that can be readily converted to different co-ordinate systems, appropriate vector spaces, or raster mapping. Once the original data processing is completed, and the user has made initial corrections to the drawing, if any are required, then the client session is ready for initial floor calibration.

Fig. 5 incorporates conceptual and procedural assumptions that require an understanding of their context to support the sequence of tasks outlined. The present invention resolves a number of technical issues that can arise when using mobile devices in situation when usage requires a geographical navigation system, and such is not readily available. The system 100 for client implementation relies on a unique method of employing odometry and visual data which drives a pose graph optimization visual simultaneous localization and mapping (vSLAM) system. The invention is provisioned by the sensors of a mobile device of average specifications, such as phone or tablet, which is configured as a client to produce a local area mapping solution without recourse to specialist equipment.

At the highest-level this pertains to orchestrating two way synchronization of 2D graphical and AR projections which are used to explore and modify floor plan specifications live and in-situ. Access to a central processor/ processor which is configured with the appropriate aspects of this method is required, but its persistence can be either in synchronous or asynchronous mode, depending of network conditions. In either mode, the central processor initially prepares the floor-plan specifications provided by the administrator, which can be downloaded as part of a regular schedule (asynchronous), or downloaded as required (synchronous) by the client session. In asynchronous mode internet access is only required by the client during scheduled times to download and upload data between the client and the host, thus, internet connectivity during an actual mapping or modification session, is not required.

Modifications in 2D or AR mode, as synchronized events, reflect changes in each other in a continuous manner. This update event also induces the appropriate changes to the floor-plan JSON specification. Adding or modifying depictions of objects by using the client studio also includes mapping their material descriptions to the options supplied by its central processor as part of the overall JSON package. The deletion of graphical objects when using the client studio also incurs modification to the JSON package, which along with inclusions and modifications is uploaded to the central processor for further processing. Elements of the client created JSON object, can act as input, or query parameters, to activate artificial intelligence agents used by the central processor to further describe or predict the outcomes of the activities in question, such as in an RF propagation prediction instance. The use of this floor plan validation JSON package, produced by the client studio when items are created, modified, or deleted are described above paragraphs.

A mechanism in the central processor to prevent initial dependencies on data being required to include 3D coordinates, such as in the situation of accessing only a 2D image of a floor-plan. The mechanism also does not depend on an initial rotation convention being imposed on uploaded images, nor does it require reference to cardinal directions. The mechanism relies on two tasks. The first, to capture image features from a supplied picture that can be categorized as lines, or other objects of cartographic interest, as described by FIG. 2; and secondly a procedure that translates these features into a 2D plane of known width and height, with the proposed chart scale applied, and all such features documented in the floor plan specification JSON data object, which is a subset of BIM. The inner elements of the JSON object describe the array of paired data points, or polygon objects, that form the floor plan specification with the X,Y coordinate system originating from the centre of this plane and marked as **O = (0,0),** normalized to the range [-1,1], with an aspect ratio=1. Furthermore, each set of paired data points, or open or closed polygon objects, describes a feature of the floor plan, such as door, window, wall, and others. These sets of data points are coupled to a field that contains the id of the real world material, and colour or texture definition id that will be use to distinguish it from other materials in the 2D and AR depictions. The basic structure of such JSONs depending on the life-cycle of the client session, but it must be apparent that this does not represent the full data storage structure, but only the items directly relevant to this submission.

The system 100 take advantage of the information supplied by the JSON 2D floor plan specifications, defining at the very least the external walls forming the boundaries of the 2D floor plan. This data is translated into a graphic, which is displayed by the client studio whilst its data points are transformed into Cartesian points. This technique need only assume details about a depth coordinate given only as a single variable, rather than a set of descriptive points forming the vertical landscape, which still satisfies the purposes of RF propagation prognostication. This process does not bar full 3D projections. The central processor readily accepts BIM objects or files, which would contain complete 3D specifications about the site. The configuration options for an x-y-z axes in real space, in terms of a user perspective, has a minimum of eight unique configurations, only one of which is the correct one in respects to: the direction faced by the user; the initial orientation of the 2D floor plan depiction; and the pivot point that rotates the local orientation of the AR floor plan overlay. In terms of translation into a real-world space, or AR space, such transformation relates to resolving the perspective of the observer in a way that translates the 2D floor plan depiction into a meaningful AR projection that is not reflected; is appropriately rotated and scaled; and is coherent within the context of the projection matrix. This enforces adherence to the direction being traversed in the real world by an AR user.

To resolve the aforementioned issues, a means is included within the client studio to display a 2D depiction of the floor plan, to which the user can insert two calibration points that also exist in their locality. The two calibration points $2D_1$ and $2D_2$, form the line segment $2D'_1 2D_2$. The equivalent calibration points, $3D_1$ and $3D_2$, must also be marked in the real world by the user via AR. This action requires the system to select the lowest horizontal plane that the device visual system can detect, which can be assumed to be the floor of the real world space. We solve this by provisioning the client system with the ability to examine all horizontal plane artefacts that the vSLAM system has constructed and is tracking on every pre-render cycle. By injecting the own callback mechanism into the tracker loop we can list and sort, by order of distance from the device camera, for the most distant trackable plane available in the current listing. These objects are highly likely to be ground level segments. These 2D horizontal plane candidates, existing in AR space as interactive agents, but not yet visible to the user, can be activated through screen touch, or other means, to insert virtual anchors to which AR objects can be affixed. An activation of such a horizontal plane candidate, occurring as a feature of the client studio, firstly creates the line segment $3D'_13D_2$ and then associates its equivalent in 2D space, $2D'_12D_2$.

This association is the graphical basis for two-way synchronization of the 2D and 3D rendering cycles. Once the 2D and AR calibration points are inserted, synchronization between the 2D floor plan and AR space can be initiated by the client session. The line segment $3D'_13D_2$ contains the basis information for the composition of the x-y-z axes in AR space, including chirality and scale, essential for the appropriate projection and navigation in AR. AR spacing is calculated by the vSLAM system in terms of meters, with its own chirality coordinate system depending on the type of system used. Synchronization of graphical compositions is performed by injecting independent callbacks to both 2D and AR pre-rendering cycles, which monitor for changes in both 2D and AR graphical modes. Whenever graphical objects are deleted, modified, or inserted, it is implicit that the editing mode in AR or 2D mode is active. The user can toggle the editing mode between the AR and 2D mode, and the main graphical orchestrator, an algorithm of the design, provisions the rendering cycle on both AR and 2D modes to paint the equivalent current scene simultaneously.

Depending on the system used to develop the client solution, the projection orientation may utilize a left or right handed coordinate system. Note that in left-handed coordinate systems, positive angles denote clockwise rotation; whilst in right-handed coordinates systems, positive angles are in an anti-clockwise direction. The technique also caters for either option in reference to how the rotation matrices are treated in a three axis coordinate system. Rotation matrices are characterized as left-handed when they are defined as:

$$Rx(\theta) = \begin{bmatrix} 1 & 0 & 0 \\ 0 & cos\theta & sin\theta \\ 0 & -sin\theta & cos\theta \end{bmatrix} Ry(\theta) = \begin{bmatrix} cos\theta & 0 & -sin\theta \\ 0 & 1 & 0 \\ sin0 & 0 & cos\theta \end{bmatrix} Rz(\theta) = \begin{bmatrix} cos\theta & sin\theta & 0 \\ -sin0 & cos\theta & 0 \\ 0 & 0 & 1 \end{bmatrix}$$

Transforming the left handed matrices set to right-handed coordinates requires that angle $\theta \rightarrow -1 * 0$, and that within the matrix elements sine $\rightarrow -sin\theta$ and -sine $\rightarrow sin\theta$. This results in right-handed systems rotation matrices taking the form:

$$Rx(\theta) = \begin{bmatrix} 1 & 0 & 0 \\ 0 & cos\theta & -sin\theta \\ 0 & sin\theta & cos\theta \end{bmatrix} Ry(\theta) = \begin{bmatrix} cos\theta & 0 & sin\theta \\ 0 & 1 & 0 \\ -sin0 & 0 & cos\theta \end{bmatrix} Rz(\theta) = \begin{bmatrix} cos\theta & -sin\theta & 0 \\ sin0 & cos\theta & 0 \\ 0 & 0 & 1 \end{bmatrix}$$

In configuring the client session these differing coordinate systems are taken into account by reference to the aforementioned method.

The transformation of 2D → 3D real world location depends on translating the normalised space expressed by the floor plan specification JSON, which has been set to being in the range [-1,1], with an aspect ratio=1. An appropriate sequence of transformations, with a preference being scaling, rotation, and translation, in that order, ensures the system is appropriately reflected, scaled, rotated and translated into local AR space.

The scaling transformation uses the field "newBoundarySizeinMeters", BSiM, embedded in the floor plan specification, as the real world scalar for each line segment described by the pair points {x1,y1,z1} and {x2,y2,z2}. The creation of the AR calibrator $3D_1'3D_2$ also measures the distance between each point 3D1 →3D2. in world space by reference to its length: $|3D_13D_2| = \sqrt{(3D_2x - 3D_1x)^2 + (3D_2y - 3D_1y)^2 + (3D_2z - 3D_1z)^2}$ in meters. Once this magnitude is known a horizontal 2D plane is instantiated in the local AR space, with the dimensions defined by BSiM and a Z-coordinate = 0. This ground plane is offset from its origin by Point $3D_1$, which is the counterpart of the translated Point $2D_1$. The AR offset is calculated as, Point3DOffset = $2D_1$ * BSiM/2, and its rotation in reference to its x-y axis is oriented towards the direction of $2D'_12D_2$, which dictates how the directed line segment in 3D space, $3D'_13D_2$, is interpreted as the x-y rotation for the AR floor plan depiction. Each element in the floor plan specification is now parented to the AR ground plane, with the appropriate scale, translation, and rotation determined in advance.

New or modified elements, actioned by the user during an editing studio session, are optionally generated through the 2D floor plan depiction, or may be executed whilst navigating the real world in AR mode. These depictions are selected as either physical boundaries that may influence RF propagation patterns (for instance wall, doors, windows, other barriers); or define RF equipment options that might behave differently within the location and conditions of their given environment. Each object inserted through the use of the client studio is paired to its world material configuration or equipment context. This is required by the system so material or equipment configurations are appropriately tested by the system. Above described context is utilized to achieve this execution. At any point in time the user can select to run an RF propagation prediction as detailed by Figs. 6A and 6B.

Fig. 5 represents the Client Studio and its two way 2D and AR Continuous Synchronization mechanism. With the client studio an authenticated user can modify the 2D representation of the floor plan. They can also manipulates AR objects that are placed in specific confines within real space. Each of these AR objects are of significance for visualization purposes and for setting up critical instantiating parameters for deploying prognostication events that rely on physical measures of a local space. As the user modifies the 2D depiction of the floor plan through the client studio 502, the client system detects whether existing objects have been altered in terms of position or configuration 504; whether any objects are deleted 506; whether they are inserted 508; or their material configuration has been changed during the session 510. Any such changes in 2D format are synchronized 512 in AR space, mirroring their effect in real time and real world space 514. Likewise, the interaction with objects in AR space also act on the 2D depiction to mirror the changes incurred. The synchronizing of the 2D data points into the geography of the real world projection relies on the mechanisms described by FIG. 5.

Once the AR space in synchronized to a 2D plane, OnUpdateScreenFrame 514 prepares the 2D scene for the Render2DFloorPlan function to paint it on the device screen 516. The function RenderARFloorPlan 518 also asynchronously paints the AR scenery. At each display instance the user is free to manipulate the floor plan depictions 520. On modifying the AR scene by altering the location or AR objects 522; deleting AR objects 524; inserting new AR objects 526; or attaching, or reattaching, specific material specifications onto the AR objects in play, concomitant to the codification of BIM related building construction material data on the back-end. This material codification by the user causes the AR objects on the front-end to display pre-defined colours, or graphical textures, which are assigned as a result of the selected material option 528 as previously configured by the administrator. At each device screen update cycle 530 the 2D floor plan 534 and AR floor plan 536 are rendered in their respective mode. At this stage the user can interact with the system 538 by opting to end the application 540 or proceed to a rendition of the prognostication as a mixed mode 2D and AR depiction presented by the device, as per Figs. 6A and 6B.

Figs. 6A and 6B illustrates an exemplary sequence diagram 600 of RF prediction visualization mechanism using the system, according to a first aspect of an embodiment. After the initial client device calibration has been completed, the user requests an RF prediction in reference to the floor plan modifications submitted to the on-line central processing system for evaluation. The RF propagation data to instigate 2D, AR or VR visualizations is prepared by the RF propagation prediction engine. Once the mapping is received by the client session, the client session prepares 2D, AR and VR visualizations, ready for rendering by the client device. The client session generates the appropriate visualizations, to which the user responds by accepting the analysis, or selects to include missing information that may become apparent once at least an initial prediction has been visualized, thus continuing the cycle of visualization synchronization until the task is completed successfully.

Figs. 6A and 6B illustrates the RF Prediction Visualization process which proceeds from the user requesting an RF prediction 602 through a user menu 676. This causes a client system/ system to prepare a data-set required to provide the prediction request 604 with its initiating parameters 606. Using the client SDK, GetRFPrediction is launched 608, which is the wrapper for the PostRFPrediction API 610. This causes the central processor to launch a query 612 which instigates the RF prediction engine to calculate the appropriate prediction 614. The result of this prediction is directed back to the client session for graphic rendering in 2D 616 and in AR modes 618. Since the new data is an overlay over the already existing floor plan depictions, in 2D and AR modes, the system re-synchronizes the RF overlay on top of the already situated visualizations. This is readily achieved since the RF data set is transmitted in a similar form as described above, noting that the data points have been set to being in the range [-1,1], with an aspect ratio=1 and originating a midpoint of an R2, plane at O = (0,0), which corresponds correctly with the coordinate system already set up by the client session.

Within the data model, a node detailedRFMeasureId provides the mechanism to obtain further information about this request, if needed. There is also an array of nodes, primaryRFMeasurements, which detail immediate information on the RF measurement types and values that are part of the RF prediction set 620. This prediction data is inserted into the client graphical rendering buffer 622, which is applied to the rendering cycle 624, to implement the appropriate depictions in AR 626 and 2D 628. Once the RF overlay is applied the system continuous 630 to cycle through its two way 2D and AR synchronization.

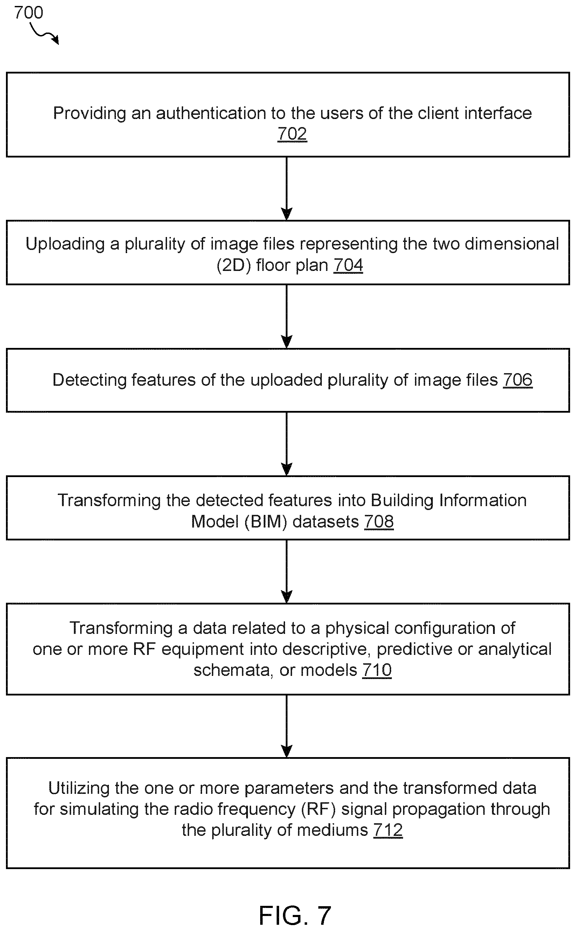

Fig. 7 illustrates a method 700 for simulating radio frequency signal propagation through a plurality of mediums, according to a second aspect of an embodiment. The method that is illustrated in Fig. 7, as a collection of operations in a logical flow graph representing a sequence of operations that can be implemented in hardware, software, firmware, or a combination thereof. The order in which the methods are described is not intended to be construed as a limitation, and any number of the described method blocks can be combined in any order to implement the methods, or alternate methods. Additionally, individual operations may be deleted from the methods without departing from the scope of the subject matter described herein. In the context of software, the operations represent computer instructions that, when executed by one or more processors, perform the recited operations. Effects and features of the second aspects are to a large extent analogous to those described above in connection with the first aspect. Embodiments mentioned in relation to the first aspect are largely compatible with the second aspect.

According to the second aspect of an embodiment, the method for simulating radio frequency signal propagation through a plurality of mediums comprising steps as described below:

At step 702, providing an authentication to the users of the client interface. Based on a role of a user the authentication is provided. The authenticated user can modify the 2D representation of the floor plan. They can also manipulates AR objects that are placed in specific confines within real space. Each of these AR objects are of significance for visualization purposes and for setting up critical instantiating parameters for deploying prognostication events that rely on physical measures of a local space. As described earlier, the authenticated user can be an administrator or non-administrator.

At step 704, uploading a plurality of image files representing the two dimensional by the user through the client app or interface or session in a wireless device.

At step 706, detecting features of the uploaded plurality of image files, in response to access granted for users of the client interface based on their role to access Application Programming Interface (API);

At step 708, transforming the detected features of the plurality of image files into Building Information Model (BIM) datasets; and translating the BIM datasets into one or more parameters for controlling a generation of 2D or AR or VR environments;

At step 710, transforming a data related to a physical configuration of one or more RF equipment into descriptive, predictive or analytical schemata, or models that are utilized for two dimensional (2D) or augmented reality (AR) or virtual reality (VR) depictions

At step 712, utilizing the one or more parameters and the transformed data related to the physical configuration of the one or more RF equipment for simulating the radio frequency (RF) signal propagation through the plurality of mediums.

According to the second aspect of an embodiment, the method further comprising, providing an authentication to the users of the client interface based on their role to access the API. The controlling of the generation of the 2D or AR or VR environment is performed by enabling augmented reality (AR) or virtual reality (VR) mode to synchronize the digital representations of the detected plurality of image files. The digital representations of the detected plurality of image files is synchronized by performing at least one: calibrating a relative position of the 2D floor plan onto an actual point in a locality; scaling and rotating the virtual representation into dimensions and bearing of an actual environment within its local domain; and continuously synchronizing the digital representations with the actual world dimensions as the user navigates actual space by mapping a floor space of the actual world with the 2D floor plan.

According to a second aspect of an embodiment, the method further comprising, cataloguing engineering or mathematical data pertaining to the physical configuration of RF equipment that is transformed into descriptive, predictive or analytical schemata, or models, required to implement machine based description, prediction or analytical reports. The method further comprising, enabling modifications to the uploaded plurality of image files representing the 2D floor plan and corresponding material configuration of barriers and obstacles in response to a request from the user at any instance. The method further comprising, producing on-line RF propagation predictions in at least one 2D, AR or VR mode depictions in response to a request from the user, by obtaining one or more parameters related to modifications to the uploaded plurality of image files representing the 2D floor plan and corresponding material configuration of barriers and obstacles at any instance.

According to the third aspect of an embodiment, the memory and the processor also may include non-transitory computer-readable media as discussed above. A "computer-readable medium," "computer-readable storage medium," "propagated-signal medium," "machine readable medium," and/or "signal-bearing medium" may include any device that includes, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium.

Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

Additionally, the system may include an input device, such as a keyboard or mouse, configured for a user to interact with any of the components of system 100. It may further include a display, such as a liquid crystal display (LCD), a cathode ray tube (CRT), or any other display suitable for conveying information. The display may act as an interface for the user to see the functioning of the processor, or specifically as an interface with the software stored in the memory or the drive unit.

The computer system may include a communication interface that enables communications via the communications network. The network may include wired networks, wireless networks, or combinations thereof. The communication interface network may enable communications via a number of communication standards, such as 802.11, 802.17, 802.20, WiMax, cellular telephone standards, or other communication standards.

Accordingly, the method and system may be realized in hardware, software, or a combination of hardware and software. The method and system may be realized in a centralized fashion in at least one computer system or in a distributed fashion where different elements are spread across several interconnected computer systems. A computer system or other apparatus adapted for carrying out the methods described herein is suited to the present disclosure. A typical combination of hardware and software may be a general-purpose computer system with a computer program that, when being loaded and executed, controls the computer system such that it carries out the methods described herein. Such a programmed computer may be considered a special-purpose computer. The method and system may also be embedded in a computer program product, which includes all the features enabling the implementation of the operations described herein and which, when loaded in a computer system, is able to carry out these operations. Computer program in the present context means any expression, in any language, code or notation, of a set of instructions intended to cause a system having an information processing capability to perform a particular function, either directly or after either or both of the following: a) conversion to another language, code or notation; b) reproduction in a different material form.

Advantages of an implementation of the system 100 to utilize 2D indoor floor specifications to generate AR floor mapping without requiring the 3D specification of the floor space, utilizing mobile devices of average configuration without recourse to specialist hardware, such as LIDAR equipment or any other solution that engages with Bluetooth or wireless equipment, or other external specialist system, which provides services such as measures of signal strength or triangulation as a location finding mechanisms to complete the AR mapping. Utilization of Bitmap based floorplans, without a data model or metadata specification, to which feature extraction methods can be applied to create data models that can be implemented in 2D and AR space to generate a floor map that can then be rectified, if needed, to complete the rendition of such in 2D, or preferably in AR space.

Extension of such mapping to include descriptive and predictive ML or AI systems in AR space to provide an immersive visualization of the descriptive or predictive overlay, such as the case of integrating RF propagation predictive models over such mapped areas. Further, the inclusion of a visualization tool set that synchronizes the 2D and AR spaces, so that items generated in the 2D space are immediately displayed in the AR space with correct pose and scale. Likewise, items created in the AR space also become immediately available in the AR space. Provision of modification of floor plan depictions, for corrective purposes, utilizing AR interactivity to make changes that will be transformed to BIM formats to provide better portability and usability of the floor plan solution.

The foregoing description of the specific embodiments will so fully reveal the general nature of the embodiments herein that a person skilled in the art can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

**Claims**

1. A system (100) for simulating radio frequency (RF) signal propagation through a plurality of mediums using a plurality of configurable digital representations of building information model in two dimensional (2D) or augmented reality (AR) or virtual reality (VR) environments comprising:

   a client interface (106) for uploading a plurality of image files representing the two dimensional (2D) floor plan, a processor (112) and a memory (124); wherein the processor (112) is connected to the client interface (106) and wherein the processor (112) comprises:
   a building information model (BIM) generation unit (116), RF equipment conversion unit (118) and a RF propagation prediction unit (120);

wherein the BIM generation unit (116) is configured to:

detect features of the uploaded plurality of image files, in response to access granted for users (102) of the client interface (106) based on their role to access the Application Programming Interface (API);
transform the detected features of the plurality of image files into Building Information Model (BIM) data-sets; and
translate the BIM data-sets into one or more parameters to control a generation of 2D or AR or VR environments;

wherein the RF equipment conversion unit (118) is configured to:
transform adjunct data related to a physical configuration of one or more RF equipment into descriptive, predictive or analytical schemata, or models that are utilized for two dimensional (2D) or augmented reality (AR) or virtual reality (VR) depictions; and
wherein the RF propagation prediction unit (120) is configured to:
utilize the one or more parameters and the transformed adjunct data related to the physical configuration of the one or more RF equipment for simulating the radio frequency (RF) signal propagation pattern predictions through the plurality of mediums.

2. The system (100) of claim 1, wherein the BIM generation unit (116) is configured to provide an authentication to the users of the client interface (106) based on their role to access the API.

3. The system (100) of claim 1, wherein said control of the generation of the 2D or AR or VR environment is performed by enabling 2D or augmented reality (AR) or virtual reality (VR) mode to synchronize the digital representations of the detected plurality of image files.

4. The system (100) of claim 3, wherein the digital representations of the detected plurality of image files is synchronized by at least one to:

calibrate a relative position of the 2D floor plan onto an actual point in a locality;
scale and rotate the virtual representation into dimensions and bearing of an actual/real environment within its local domain; and
continuously synchronize the digital representations with the actual world dimensions as the user navigates actual space by mapping a floor space of the actual world in reference to the 2D floor plan.

5. The system (100) of claim 1, wherein said control of the generation of the 2D or AR or VR environment is performed by enabling augmented reality (AR) or virtual reality (VR) mode to synchronize the digital representations of the detected plurality of image files using Visual Odometry (VO) and Simultaneous Localization and Mapping (SLAM) techniques.

6. The system (100) of claim 1, wherein the RF equipment conversion unit (118) is further configured to catalogue engineering or mathematical data pertaining to the physical configuration of RF equipment that is transformed into descriptive, predictive or analytical schemata, or models, required to implement machine based description, prediction or analytical reports.

7. The system (100) of claim 1, wherein the client interface (106) is configured to enable modifications to the uploaded plurality of image files representing the 2D floor plan and corresponding material configuration of barriers and obstacles in response to a request from the user at any instance.

8. The system (100) of claim 7, wherein the RF propagation prediction unit (120) is configured to produce on-line RF propagation predictions in at least one 2D, AR or VR mode depictions in response to a request from the user, by obtaining one or more parameters related to modifications to the uploaded plurality of image files representing the 2D floor plan and corresponding material configuration of barriers and obstacles at any instance.

9. The system (100) of claim 1, wherein the RF propagation prediction unit (120) is configured to render generated visualisations of selected at least one initial prediction after acceptance from the user.

10. The system (100) of claim 1, wherein the RF propagation prediction unit (120) is configured to render the generated visualisations of at least one initial prediction; wherein the at least one initial prediction is related to a dataset depicting the real/actual environment with or without complete physical configuration specifications.

11. The system (100) of claim 1, wherein further input from the user that relates to completing the virtual representation of the floor space being inspected after rendering the generated visualizations comprises at least one of:

a correction of a plurality of boundary or barrier locations of the floor space;
a selection of objects and their poses as encountered in the real environment; and
a matching of physical material configurations of objects in the floor space, which are paired to respective mathematical properties sufficient to act as one or more parameters of the at least one initial prediction; wherein the one or more parameters comprises information regarding AR or VR environments, input from the user that relates to floor configurations and indoor objects in the relative actual world positions and material configurations in the actual world.

12. The system (100) of claim 1, wherein the BIM generation unit (116) is configured to receive uploaded BIM datasets directly through the client interface (106) by the user based on their role; and wherein the plurality of image files representing a two dimensional (2D) floor plan comprises at least one of Bitmap type files, JPG, JPEG and PNG files.

13. The system (100) of claim 1, wherein the user of the client interface (106) having access to manage a selection and creation of digital material delivery distribution, within its domain, including most modern floor configurations of digital representations.

14. The system (100) of claim 1, wherein the BIM generation unit (116) is configured to transform the detected features of the plurality of image files into Building Information Model (BIM) data sets using a Headless Content Management System.

15. A method (700) for simulating radio frequency (RF) signal propagation through a plurality of mediums using a plurality of configurable digital representations of building information model in two dimensional (2D) or augmented reality (AR) or virtual reality (VR) environments comprising:

uploading, by a user, a plurality of image files representing the two dimensional (2D) floor plan using a client interface;
detecting features of the uploaded plurality of image files, in response to access granted for users of the client interface (106) based on their role to access an Application Programming Interface (API);
transforming the detected features of the plurality of image files into Building Information Model (BIM) data-sets;
translating the BIM data-sets into one or more parameters for controlling a generation of 2D or AR or VR environments;
transforming adjunct data related to a physical configuration of one or more RF equipment into descriptive, predictive or analytical schemata, or models that are utilized for two dimensional (2D) or augmented reality (AR) or virtual reality (VR) depictions; and
utilizing the one or more parameters and the transformed data related to the physical configuration of the one or more RF equipment for simulating the radio frequency (RF) signal propagation through the plurality of mediums.

FIG. 1

FIG. 2

FIG. 3

EP 4 131 052 A1

FIG. 4

FIG. 5

FIG. 6A

600

On-line API
666

Cloud Processor
690

RF Prediction Engine
692

A

Post RF
Prediction
(Request) 610

Query RF Prediction 612

Prepare RF Prediction
614

B

FIG. 6B

700

Providing an authentication to the users of the client interface
702

Uploading a plurality of image files representing the two dimensional (2D) floor plan 704

Detecting features of the uploaded plurality of image files 706

Transforming the detected features into Building Information Model (BIM) datasets 708

Transforming a data related to a physical configuration of one or more RF equipment into descriptive, predictive or analytical schemata, or models 710

Utilizing the one or more parameters and the transformed data for simulating the radio frequency (RF) signal propagation through the plurality of mediums 712

FIG. 7

## EUROPEAN SEARCH REPORT

**Application Number**

EP 21 19 9274

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 606 963 B2 (TIWARI ANKIT [US] ET AL) 31 March 2020 (2020-03-31)<br>* abstract *<br>* column 36, line 26 - column 38, line 38; figures 7C, 7D *<br>* column 33, line 64 - column 35, line 3; figure 7A *<br>* column 39, line 6 - line 66 *<br>----- | 1-15 | INV.<br>G06F30/20<br>G06F30/13 |
| X | US 2004/236547 A1 (RAPPAPORT THEODORE S [US] ET AL) 25 November 2004 (2004-11-25)<br>* abstract; figures 1, 2, 3 *<br>----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 24 February 2022 | Ross, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9274

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2022

| Patent document cited in search report | | Publication date | Patent family member(s) | | Publication date |
|---|---|---|---|---|---|
| US 10606963 | B2 | 31-03-2020 | CN | 107667366 A | 06-02-2018 |
| | | | DK | 3275204 T3 | 21-09-2020 |
| | | | EP | 3275204 A1 | 31-01-2018 |
| | | | US | 2018075168 A1 | 15-03-2018 |
| | | | WO | 2016154306 A1 | 29-09-2016 |
| US 2004236547 | A1 | 25-11-2004 | AU | 2004206564 A1 | 05-08-2004 |
| | | | CA | 2512388 A1 | 05-08-2004 |
| | | | EP | 1595192 A2 | 16-11-2005 |
| | | | JP | 2007525040 A | 30-08-2007 |
| | | | KR | 20050102087 A | 25-10-2005 |
| | | | US | 2004236547 A1 | 25-11-2004 |
| | | | WO | 2004066077 A2 | 05-08-2004 |

EPO FORM P0459

For more details about this annex : see Official Journal of the European Patent Office, No. 12/82